# EUROPÄISCHE PATENTSCHRIFT

(11) **EP 1 332 075 B1**
(45) Veröffentlichungstag und Bekanntmachung des Hinweises auf die Patenterteilung: **15.12.2004**
(21) Anmeldenummer: 01988671.2
(22) Anmeldetag: 26.10.2001
(51) Int. Cl.: B60S 1/40

(54) **VORRICHTUNG ZUM LÖSBAREN, GELENKIGEN VERBINDEN EINES WISCHBLATTS ZUM REINIGEN VON SCHEIBEN MIT EINEM WISCHERARM**
DEVICE FOR DETACHABLY AND HINGEDLY CONNECTING A WIPER BLADE FOR CLEANING PANES TO A WIPER ARM
DISPOSITIF DE CONNEXION ARTICULEE AMOVIBLE D'UN BALAI D'ESSUIE-GLACE DESTINE AU NETTOYAGE DE VITRES AVEC UN BRAS D'ESSUIE-GLACE

(30) Priorität: 28.10.2000 DE 10053602
(43) Veröffentlichungstag der Anmeldung: 06.08.2003
(73) Patentinhaber: ROBERT BOSCH GMBH, 70442 Stuttgart (DE)
(72) Erfinder: BASEOTTO, Michel, B-3550 Hasselt (BE); WILMS, Christian, B-3582 Beringen (BE); VERELST, Hubert, B-3300 Tienen (BE); BREESCH, Frans, B-3840 Borgloon (BE); VANGEEL, Tom, B-3540 Herk-de-Stad (BE)
(86) Internationale Anmeldenummer: PCT/DE2001/004019
(87) Internationale Veröffentlichungsnummer: WO 2002/034592

(56) Entgegenhaltungen:
- DE-A- 19 641 042
- DE-A- 19 729 864

## Beschreibung

### Stand der Technik

Wischblätter zum Reinigen von Kraftfahrzeugscheiben sind stets gelenkig mit dem die Arbeitsbewegung ausführenden Wischerarm verbunden, damit das Wischblatt gegenüber dem Wischerarm eine Schwingbewegung ausführen kann, deren Schwingachse quer zur Längserstreckung des Wischerarms und quer zur Richtung einer auf das Wischblatt einwirkenden Kraft liegt, mit welcher das Wischblatt an die Scheibe angelegt wird. Diese gelenkige Verbindung zwischen dem wischblatt und dem Wischerarm ist von besonderer Bedeutung. Weil die zu wischende, in aller Regel sphärisch gekrümmte Scheibe nicht den Abschnitt einer Kugeloberfläche darstellt, muss sich das Wischblatt während seiner Wischbewegung ständig der jeweiligen Lage und dem Verlauf der Scheibenoberfläche anpassen können. Die Gelenkverbindung muss also leichtgängig aber auch spielfrei sein, damit eine ruhige ratterfreie Wischbewegung möglich ist.

Bei Wischblättern, bei denen anstelle einer herkömmlichen, mehrgliedrigen Tragbügelkonstruktion zur Verteilung der vom Wischerarm kommenden Anlegekraft auf die Wischleiste ein bandartig langgestrecktes, federelastisches Tragelement tritt, an dessen Unterseite die an der Windschutzscheibe anlegbare Wischleiste angeordnet ist, muss das Tragelement an seiner dem Wischerarm zugewandten oberen Bandfläche mit einem Bauteil versehen werden, das mit den erforderlichen Gelenkmitteln versehen als wischblattseitige Hälfte einer Anschlusskupplung dient, deren andere Hälfte mit dem Wischerarm verbunden ist. Um den schon beschriebenen, an das Gelenk gestellten Anforderungen gerecht zu werden, muss die Gelenkachse quer zur Mischblatt-Längserstreckung ausgerichtet sein. Ferner muss sich die Gelenkachse auch quer zur Richtung der Anlegekraft erstrecken, welche über den Wischerarm wirkend das Wischblatt an der Scheibe angelegt hält. Üblicherweise enthält eine solche Gelenkverbindung einen Gelenkzapfen, der mit dem Wischblatt beziehungsweise mit dem Wischerarm verbunden ist. Die dem Gelenkzapfen zugeordnete Zapfen-Lageraufnahme befindet sich dann am Wischerarm beziehungsweise am Wischblatt.

Bei einer bekannten Vorrichtung der im Oberbegriff des unabhängigen Anspruchs bezeichneten Art (DE-A-197 29 862) ist die wischblattfeste Kupplungshälfte ein mit dem Tragelement verbundenes Kunststoffteil mit zwei aus diesem heraustretenden, miteinander fluchtenden Enden eines Gelenkzapfens. Zur Befestigung an dem Tragelement sind an dieser Kupplungshälfte Längsnuten angeordnet, in welche die äußeren Längskanten des Tragelements eintauchen. Um einen ordnungsgemäßen Sitz der Kupplungshälfte am Tragelement sicherzustellen, sollen die Tragelement-Längskanten lediglich aufgerauht oder mit krallenartigen Zähnen versehen sein. Es hat sich jedoch gezeigt, dass eine derartige Befestigung der Dauer-Wechselbelastung wie sie bei der Hinund Herbewegung während des Wischbetriebs auftritt nicht zur vollen Zufriedenheit gewachsen ist.

Erfindungsgemäß sind eine Vorrichtung zum lösbaren Verbinden eines Wischblatt mit einem Wischerarm und das Wischblatt selbst vorgeschlagen.

### Vorteile der Erfindung

Durch die Ausbildung der wischblattseitigen Kupplungshälfte als Blech-Biegeteil ist es möglich, dieses beispielsweise mittels des bewährten Funktschweißverfahrens mit dem Tragelement des Wischblatts zu verbinden. Eine derartige Befestigung hält zuverlässig einer Dauer-Wechselbelastung stand. Durch die direkte Anformung des Gelenkzapfens an diese Kupplungshälfte kann ein Ewischenmontageschritt - die Befestigung eines separaten Metall-Gelenkbolzens an einem Träger der Kupplungshälfte - entfallen.

Zweckmäßig ist dazu zumindest ein Teilabschnitt des Blech-Biegeteils hülsenartig gerollt als Gelenkzapfen umgeformt.

Eine besondere fertigungsgerechte Ausbildung der wischblattseitigen Kupplungshälfte ergibt sich, wenn zum Blech-Biegeteil mit Abstand voneinander und parallel zueinander ausgerichtete, mit dem Tragelement verbundene Basisstreifen gehören, welche durch einen den Gelenkzapfen aufweisenden Bügel miteinander verbunden sind.

Bei einer für bestimmte Anwendungsfälle bevorzugten Ausführungsform der erfindungsgemäßen Verbindungsvorrichtung weist der hülsenartig gerollte Gelenkzapfen zwei miteinander fluchtende Teilzapfen auf, die seitlich über den Bügel hinaus ragen. Durch die Ausgestaltung der wischblattseitigen Kupplungshälfte kann ein niedrig bauendes Wischblatt realisiert werden, dessen Vorteile besonders bei hohen Fahrgeschwindigkeiten des Kraftfahrzeugs zur Geltung kommen.

Wenn das Tragelement durch zwei zueinander parallel in nach außen randoffenen Längsnuten der Wischleiste angeordnete Federschienen gebildet ist, ist eine durch die Kupplungshälfte unbeeinflusste Relativbewegung zwischen Wischleiste und den Federschienen erforderlich, wenn die zu wischende Scheibe in ihrem Verlauf eine sich stetig ändernde Krümmung aufweist. Dies wird dadurch sichergestellt, dass sich die Längsachse des Gelenzapfens mit Abstand von der oberen Bandseite des Tragelements befindet. Dadurch verbleibt zwischen dem Gelenkzapfen und der Wischleiste genügend Raum für den Bereich der Wischleiste, welche die Längsnuten nach oben begrenzt.

Um dem Wischblatt während seiner quer zu seiner Längserstreckung erfolgenden Arbeitsbewegung eine gute Seitenführung zu geben, befindet sich an jedem Basisstreifen ein sich vom Tragelement weg erstreckender und in Längsrichtung des Tragelements ausgerichteter Schenkel, wobei die Schenkel quer zur Längserstreckung des Wischblatts gesehen mit Abstand voneinander liegen und diese Schenkel passend zwischen am Arm vorgesehene, zum Wischblatt gerichtete Wangen eintauchen.

Besondere Vorteile ergeben sich, wenn die wischerarmfeste Kupplungshälfte vorzugsweise am freien Ende des Wischerarms angeordnet ist, wenn weiter diese Kupplungshälfte einen U-förmigen Querschnitt hat und die Zapfen-Lageraufnahmen an den U-Schenkeln dieser Kupplungshälfte ausgebildet sind. Dabei kann sich der Wischerarm durchaus mit einer Verlängerung über die wischerarmseitige Kupplungshälfte hinaus erstrecken. Der U-förmige Querschnitt dieser Kupplungshälfte soll sich also am antriebswirksamen Endbereich des wischerarms befinden, weil dann beispielsweise die Schenkel der Wischblatt-Basisstreifen mit den Innenseiten der U-Schenkeln des Wischerarms im Sinne der erwähnten Wangen zusammenwirken können. Gleichzeitig können dann an den U-Schenkeln des Wischerarms ohne weitere Maßnahmen auch die Zapfen-Lageraufnahmen ausgebildet sein.

Wenn in Weiterbildung der Erfindung sich an den voneinander abgewandten Längskanten der Basisstreifen krallenartige Fortsätze befinden, welche die voneinander abgewandten Längskanten des Tragelements klammerartig umgreifen, wird die Sicherheit der Verbindung zwischen dem Tragelement und der wischblattseitigen Kupplungshälfte verbessert, weil über diese Krallen eine zusätzliche Klemmwirkung zum Tragelement ausgeübt werden kann. Darüber hinaus können diese krallenartigen Fortsätze als Führungen dienen, wenn diese Kupplungshälfte zur Montage am Tragelement positioniert wird.

Eine für bestimmte Anwendungsfälle besonders vorteilhafte Ausgestaltung der Erfindung wird erreicht, wenn der Abstand vom Tragelement zur Längsachse des Gelenkzapfens mit zumindest doppelt so groß ist wie der Durchmesser des Gelenkzapfens, wenn weiter die Basisstreifen über an diese angeformte Winkelstützen des Bügels mit dem Gelenkzapfen verbunden sind und zwischen den quer zur Wischblatt-Länserstreckung einander gegenüberliegenden Winkelstützen des Basisstreifen ein Durchgang verbleibt, welcher durch den Gelenkzapfen nach oben begrenzt ist. Neben weiteren Verteilen ermöglicht der sich zwischen den Winkelstützen des Bügels und dem mit diesem beidendig verbundene Gelenkzapfen ergebende Durchgang die Verwendung des schon erläuterten Wischblattaufbaus, bei dem das Tragelement zwei in Längsnuten der Wischleiste angeordnete Federschienen hat und die obere Begrenzung der Längsnuten durch einen Deckbereich der Wischleiste erreicht wird, welche sich über die obere Bandseite des Tragelements erhebt. Auch bietet dieser Raum genügend Platz für die Zapfen-Lageraufnahmen des Wischerarms.

Um ein besonders kompakter Aufbau der wischblattseitigen Kupplungshälfte zu erreichen ist es zweckdienlich, wenn die Winkelstützen zwischen zwei klammerartigen Fortsätzen der Basisstreifen angeordnet sind.

Eine besonders gute Seitenführung des Wischblatts während des Wischbetriebs ergibt sich, wenn an jedem Basisstreifen ein sich vom Tragelement weg erstreckender und in Längsrichtung des Tragelements ausgerichteter Schenkel befindet, wenn diese Schenkel quer zur Längserstreckung des Wischblatts gesehen mit Abstand voneinander liegen und wenn schließlich diese Schenkel zwischen am Wischerarm vorgesehene zum Wischblatt gerichtete Wangen passend eintauchen.

Eine besonders vorteilhafte Fortbildung des Erfindungsgedankens sieht vor, dass die wischerarmfeste Kupplungshälfte vorzugsweise am freien Ende des Wischerarms angeordnet ist, dass diese Kupplungshälfte einen U-förmigen Querschnitt hat und dass die Zapfen-Lageraufnahme an einem an der U-Basis vorhandenen, sich zwischen den beiden U-Schenkeln erstreckenden Vorsprung ausgebildet sind. Dadurch ergibt sich ein vorzüglicher Schutz des Gelenks gegen Umwelteinflüsse, weil der Gelenkzapfen und die Zapfen-Lageraufnahmen des Wischerarms innerhalb eines Raumes gekapselt untergebracht sind, der von den beiden U-Schenkeln und der U-Basis des Wischerarms umschlossen ist. Weiter können die beiden U-Schenkeln gleichzeitig die Funktion der vorerwähnten, mit den Schenkeln des Wischblatts zusammenarbeitenden Wangen übernehmen.

Ein Wischblatt mit einem bandartig langgestreckten Tragelement für eine an dessen unteren Bandfläche angeordneten gummielastischer Wischleiste, an dessen oberen Bandfläche im mittleren Längsabschnitt eine wischblattseitige Kupplungshälfte zum gelenkigen Verbinden des Wischblatts mit einem mit der anderen Kupplungshälfte versehener Wischerarm angeordnet ist, wobei die wischblattseitige Kupplungshälfte zwei quer zur Längserstreckung des Wischblatts mit Abstand voneinander angeordnete Stützen für zumindest einen an diesen gehaltenen zapfenartigen Gelenkbolzen hat, dessen Gelenkachse quer zur Wischblatt-Längserstreckung ausgerichtet ist, kann auf einfache Weise stabil ausgeführt und dauerhaft mit der wischblattseitigen Kupplungshälfte verbunden werden, wenn diese Kupplungshälfte als Blech-Biegeteil ausgebildet und der Gelenkzapfen einstückig mit diesem verbunden an dieses angeformt ist.

Entsprechen den jeweiligen Anwendungsfällen kann es zweckmäßig sein, wenn entweder der Gelenkzapfen zwischen den beiden Stützen angeordnet ist oder aber der Gelenkzapfen zwei miteinander fluchtende Teilzapfen aufweist, die an den voneinander abgewandten Außenseiten der Stützen angeordnet sind und sich von diesen wegerstrecken.

weitere vorteilhafte Weiterbildung und Ausgestaltungen der Erfindung sind in der nachfolgenden Beschreibung von in der dazugehörigen Zeichnung dargestellten Ausführungsbeispielen angegeben.

### Zeichnung

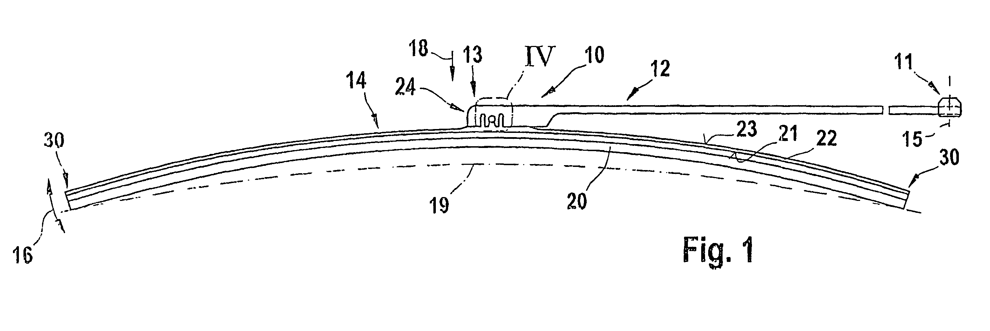

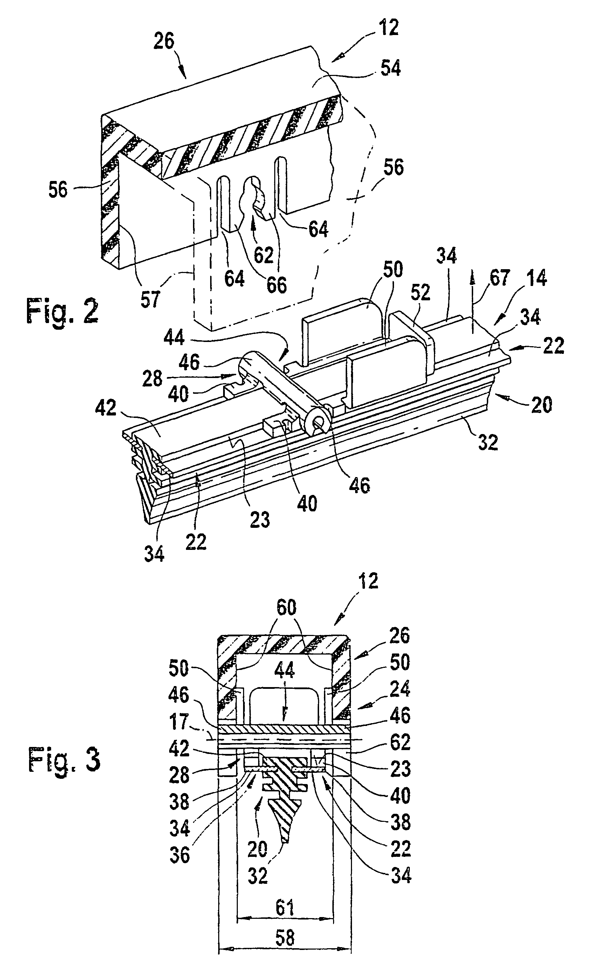

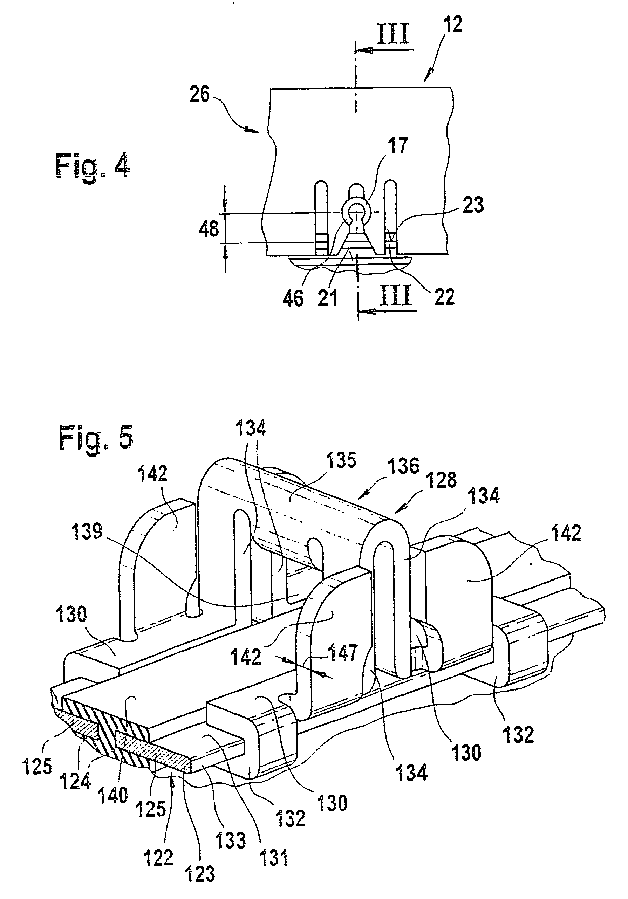

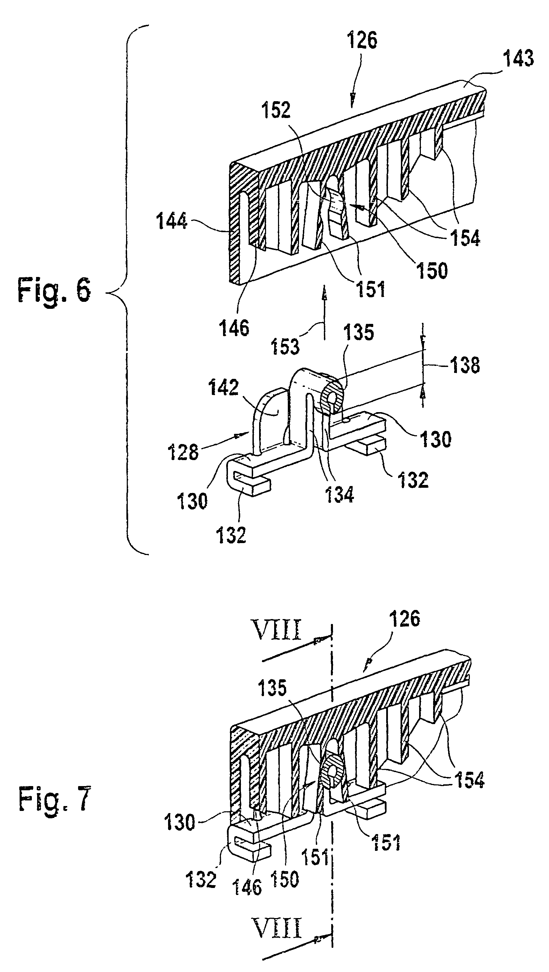

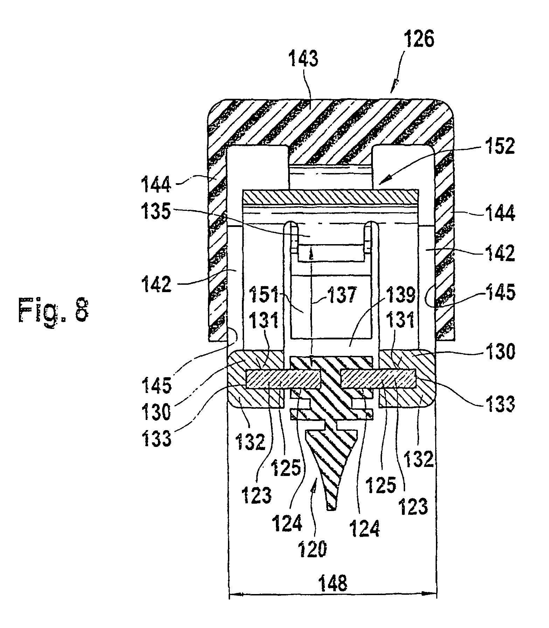

In der Zeichnung zeigen: Figur 1 eine unmaßstäbliche Seitenansicht eines wischblatts, das über eine Verbindungsvorrichtung mit einem Wischerarm gelenkig verbunden ist, Figur 2 eine in Figur 1 mit IV bezeichnete Einzelheit isometrisch, im Längsschnitt vergrössert dargestellt, wobei das Wischblatt vom Wischerarm getrennt ist, Figur 3 einen Querschnitt durch die Anordnung gemäß Figur 4 entlang der Linie III-III, Figur 4 eine vergrößerte Darstellung der in Figur 1 mit IV bezeichneten Einzelheit, Figur 5 eine isometrische Teildarstellung eines Wischblatts mit seiner gemäß einer anderen Ausführungsform der Erfindung ausgebildeten Kupplungshälfte in vergrößerter Darstellung, Figur 6 eine separate isometrische Darstellung der beiden Kupplungshälften gemäß der anderen Ausführungsform, Figur 7 die beiden Kupplungshälften gemäß Figur 6 in zusammengebauten Zustand und Figur 8 einen Querschnitt entlang der Linie VIII-VIII durch die Anordnung gemäß Figur 7 in vergrößerter Darstellung.

### Beschreibung der Ausführungsbeispiele

Zu einem in Figur 1 in Seitenansicht dargestellten Wischhebel 10 gehören ein von seinem einen Ende 11 aus pendelnd angetriebener Wischerarm 12 und ein mit diesem lösbar verbundenes Wischblatt 14. Das Wischblatt 14 ist mit dem anderen, von der Pendelachse 15 des Wischerarms abgewandten, freien Ende 13 so verbunden, dass es gegenüber dem Wischerarm 12 eine Schwingbewegung (Doppelpfeil 16) ausführen kann. Die Lage und der Verlauf der Schwingachse ist in den Figuren 3 und 4 erkennbar und mit der Bezugszahl 17 versehen worden. Wie aus diesen Figuren ersichtlich ist, erstreckt sich die Schwingachse 17 quer zur Längserstreckung des Wischerarms 12 und ebenso quer zu der Richtung einer in Figur 1 mit einem Pfeil 18 bezeichneten Kraft, welche durch den Wischerarm auf das Wischblatt 14 ausgeübt wird und dieses an der zu wischenden Scheibe 19 mit einer langgestreckten, gummielastischen Wischleiste 20 anlegt. Die langgestreckte, gummielastische Wischleiste 20 ist an der unteren Bandfläche 21 eines federelascischen, bandartig langgestreckten, ein- oder mehrteiligen Tragelements 22 angeordnet. An der anderen, oberen, dem Wischerarm 12 zugewandten Bandfläche 23 des Wischblatts 14 ist der Wischhebel 10 mit einer Verbindungsvorrichtung 24 versehen, zu der eine erste, wischerarmseitige Kupplungshälfte 26 und eine wischblattseitige zweite Kupplungshälfte 28 gehören (Figuren 2 bis 4). Die in Figur 1 mit 19 bezeichnete Oberfläche gehört zu einer in aller Regel sphärisch gekrümmten Windschutzscheibe eines Kraftfahrzeuges. Wie weiter aus Figur 1 ersichtlich ist, hat das noch nicht an der Scheibe angelegte, gekrümmte Wischblatt 14 eine stärkere Krümmung als die Scheibenoberfläche 19. Da die Linie 19 die stärkste Krümmung der Scheibenoberfläche darstellen soll ist klar ersichtlich, dass die Krümmung des mit seinen beiden Enden 30 an der Scheibe 19 anliegenden, noch unbelasteten Wischblatts 14 stärker ist als die maximale Scheibenkrümmung. Unter dem in Richtung des Pfeiles 18 wirksamen Anpressdrucks legt sich das Wischblatt 14 mit seiner wischleiste 20 beziehungsweise mit seiner an der Wischleiste ausgebildeten Wischlippe 32 über seine gesamte Länge an der Scheibenoberfläche 19 an. Dabei baut sich im aus Metall gefertigten, federelastischen Tragelement 22 eine Spannung auf, welche für eine ordnungsgemäße Anlage der Wischleiste über deren gesamte Länge an der Scheibe 19 sorgt. Weil die in aller Regel sphärisch gekrümmte Scheibe nicht einen Abschnitt einer Kugeloberfläche darstellt, muss sich das Wischblatt 14 gegenüber dem Wischerarm 12 während seiner quer zu seiner Längserstreckung erfolgenden Wischbewegung ständig der jeweiligen Lage und dem Verlauf der Scheibenoberfläche 19 anpassen können. Dies wird durch die gelenkige Verbindung zwischen dem Wischerarm 12 und dem Wischblatt 14 und die schon erwähnte notwendige Schwingbewegung (Doppelpfeil 16) erreicht, mit der das wischblatt 14 gegenüber dem Wischerarm 12 um die Schwingachse 17 schwingen kann.

Im Folgenden soll nun auf die besondere Ausgestaltung einer ersten Ausführungsform dieser Gelenkverbindung unter Zuhilfenahme der Figuren 2 bis 4 näher eingegangen werden. Wie die Figuren 2 und 3 zeigen, weist das federelastische Tragelement 22 zwei zueinander parallel angeordnete Federschienen 34 auf, die in einer gemeinsamen Ebene liegen. Ihre einander zugewandten Innenkanten befinden sich in Längsnuten 36, welche im oberen Bereich der Wischleiste 20 angeordnet sind. Die Federschienen 34 ragen mit äußeren Längsstreifen 38 aus den Längsnuten 36, wobei die obere Bandfläche 23 des Tragelements 22 dem Wischerarm 12 zugewandt ist. An dieser oberen Bandfläche 23 ist die wischblattseitige Kupplungshälfte 28 befestigt, vorzugsweise angeschweißt. Sie ist als Blech-Biegeteil ausgebildet und hat zwei zueinander parallel angeordnete Basisstreifen 40, welche mit ihrer Unterseite an der oberen Bandfläche 23 des Tragelements an den jeweiligen Längsstreifen 38 anliegen und beispielsweise mittels Punktschweißung mit dem Tragelement 22 verbunden sind. Die Basisstreifen 40 erstrecken sich in Längsrichtung des wischblatts. Zwischen den beiden Basisstreifen 40 befindet sich somit ein sogenannter Deckbereich 42 der Wischleiste 20, der die obere Begrenzung der Längsnuten 36 darstellt (Figur 3). Die beiden Basisstreifen 40 sind nahe ihren einen Enden einander benachbart über einen einstückig mit ihnen ausgeführten bügelartigen Steg 44 miteinander verbunden. Der Steg 44 verläuft also quer zur Längserstreckung des Wischblatts 14 beziehungsweise quer zur Längserstreckung des Tragelements 22. Er erstreckt sich mit seinen beiden Enden über die beiden Basisstreifen 40 hinaus. Zumindest diese beiden Enden sind derart hülsenartig gerollt, dass sich miteinander fluchtende Teilzapfen 46 ergeben, welche seitlich über die Basisstreifen 40 hinausragen und als Gelenkzapfen dienen (Figur 2 und 3). Sie bilden somit Verlängerungen des die beiden Basisstreifen verbindenden Stegs 44, welcher ebenfalls derart umgeformt ist, dass er eine steife Verbindung zwischen den beiden Basisstreifen 40 herstellt. Gleichzeitig bildet der Steg eine Abstützung für die beiden den Gelenkzapfen bildenden Teilzapfen 46 an den beiden Basisstreifen 40. Aus den Figuren 2 bis 4 wird deutlich, dass sich die Längsachse 17 der beiden Gelenkzapfen 46 mit Abstand 48 von der oberen Bandfläche 23 des Tragelements 22 befindet (Figur 4). Dadurch ist ein freier störungsfreier Durchgang der Wischleiste 20 unter dem Steg 44 sichergestellt. In seinem weiteren Verlauf ist an jeden der beiden Basisstreifen 40 der wischblattseitigen Kupplungshälfte 28 ein Schenkel 50 angebogen. Die beiden Schenkel erstrecken sich parallel zueinander in Längsrichtung des Tragelements 22 in auf dem Tragelement stehend ausgerichteten Ebenen. Weiter ist diese Kupplungshälfte 28 an ihrem von dem Steg 44 abgewandten Endbereich mit einer Versteifungswand 52 versehen, welche quer zur Wischblatt-Längserstreckung ausgerichtet ist und die beiden Basisstreifen 40 miteinander verbindet. Die Versteifungswand 52 ist vorzugsweise ebenso wie die beiden Schenkel 50 einstückig mit diesen verbunden, das heißt, sie wird an diese angeformt. Selbstverständlich verbleibt zwischen der Versteifungswand 52 und den Federschienen 34 genügend Raum für den Deckbereich 42 der Wischleiste 20, so dass dieser berührungsfrei unter der Versteifungswand 52 hindurchgeführt ist. Es ergibt sich also ein als wischblattseitige Kupplungshälfte dienendes Blech-Biegeteil, mit zwei Basisstreifen 40 die über einen Steg 44 miteinander verbunden sind. Beidseitige Verlängerungen des Stegs sind so gerollt, dass sich zwei Gelenkzapfen 46 ergeben, deren Längsachsen miteinander fluchten. Weiter gehören zu der Kupplungshälfte 28 die beiden einstückig an die Basisstreifen 40 angeformten Schenkel 50 sowie die ebenfalls einstückig mit den Basisstreifen 40 verbundene, quer ausgerichtete Versteifungswand 52.

Die wischerarmseitige Kupplungshälfte 26 ist beim Ausfüchrungsbeispiel am freien Ende 13 des Wischerarms 12 ausgebildet. Dies schließt jedoch nicht aus, dass der Wischerarm beispielsweise aus Gründen des Stylings mit einer Verlängerung versehen sein kann, welche sich bis zum vom Wischerarm abgewandten Ende des Wischblatts 14 erstreckt. Wenn also hier vom freien Ende des Wischerarms gesprochen wird, ist damit stets der Abschnitt des Wischerarms gemeint, welcher antriebswirksam mit dem Wischblatt 14 verbunden ist. Wie die Figuren 2 und 3 zeigen, hat die wischerarmseitige Kupplungshälfte 26 einen U-förmigen Querschnitt. Sie hat somit eine U-Basis 54, an welcher zwei zueinander parallele, mit Abstand voneinander befindliche U-Schenkel 56 angeordnet sind. Aus Gründen der Übersichtlichkeit ist die Kupplungshälfte 26 in Figur 2 im Längsschnitt dargestellt, so dass ein Teil der U-Basis 54 und der eine U-Schenkel 56 strichpunktiert dargestellt sind. Figur 3 zeigt, dass die voneinander abgewandten Enden der Teil- oder Gelenkzapfen 46 mit einem Abstand 58 voneinander liegen, welcher dem Abstand der beiden Außenflächen der U-Schenkel 56 entspricht. Die einander zugewandten Innenwände 60 der U-Schenkel 56 liegen mit einem Abstand 61 voneinander, welcher auf den Abstand der voneinander abgewandten Außenflächen der Schenkel 50 der wischblattseitigen Kupplungshälfte 28 so abgestimmt ist, dass diese praktisch spiellos passend in der in Figur 3 dargestellten Weise zwischen die U-Schenkel 56 beziehungsweise zwischen die einander zugewandten Wangen 57 dieser U-Schenkel der wischerarmseitigen Kupplungshälfte 26 eintauchen können. Dadurch ergibt sich eine ausgezeichnete Führung des Wischblatts am Wischerarm, wenn das Wischblatt während seiner Wischarbeit quer zu seiner Längserstreckung über die zu wischende Scheibe 19 bewegt wird. Die wischerarmseitige Kupplungshälfte 26 ist aus einem elastischen Kunststoff hergestellt. In den beiden U-Schenkeln 56 sind als Lageraufnahmen für die Gelenkzapfen 46 zu den freien Enden der U-Schenkel 56 hin randoffene Ausnehmungen 62 angeordnet. Beidseitig jeder Ausnehmung 62 sind die U-Schenkel 56 jeweils mit ebenfalls randoffenen Schlitzen 64 versehen, so dass die zwischen den Schlitzen und der Ausnehmung verbleibenden fingerartigen Streifen 66 gegen eine Rückstellkraft soweit gespreizt werden können, dass die Gelenkzapfen 46 in ihre an den einander zugewandten Seiten der Streifen 66 ausgebildeten Lagerstellen eingebracht werden können, wenn das Wischblatt in Richtung des Pfeiles 67 an den Wischerarm 12 angeschlossen wird. Es ergibt sich dann ein Zusammenbau, der in den Figuren 3 und 4 dargestellt ist. Die Trennung des Wischblatts 14 vom Wischerarm 12 erfolgt entgegengesetzt der Zusammenbaubewegung, wobei durch eine entsprechende Belastung des Wischblatts 14 entgegen dem Pfeil 67 die beiden Streifen 66 wieder gegen die Rückstellkraft elastisch ausgelenkt beziehungsweise gespreizt werden, so dass die Gelenkzapfen 46 aus den Ausnehmungen 62 beziehungsweise aus ihren Zapfen-Lageraufnahmen gelangen können.

Eine andere Ausführungsform der erfindungsgemäßen Verbindungsvorrichtung wird anhand der Figuren 5 bis 8 erläutert. Wie Figur 5 zeigt, ist auch hier die wischblattseitige Kupplungshälfte 128 als Blech-Biegeteil ausgebildet. Dieses hat ebenfalls zwei voneinander mit Abstand und parallel zueinander angeordnete Basisstreifen 130, die sich in Längsrichtung des Wischblatts beziehungsweise des Tragelements 122 erstrecken. Das Tragelement 122 umfasst auch hier zwei in einer gemeinsamen Ebene und parallel zueinander ausgerichtete Federschienen 125, die zusammen das Tragelement 122 bilden. Die einander zugewandten Innen-Längsabschnitte der Federschienen 125 liegen in randoffenen Längsnuten 124 der Wischleiste 120 und ragen mit äußeren Längsstreifen 123 aus den Längsnuten 124 heraus. An der oberen Bandfläche 131 der Federschienen 125 beziehungsweise des Tragelements 122 liegen die Basisstreifen 130 an. An den von einander abgewandten Längskanten der Basisstreifen befinden sich krallenartige Fortsätze 132, welche die voneinander abgewandten äußeren Längskanten 133 des Tragelements 122 klammerartig umgreifen. Zusätzlich zu der als Punktschweißung ausgebildeten Befestigung der Basisstreifen 130 an den Federschienen 125 des Tragelements 122 verbessern die krallenartigen Fortsätze 132 die Verbindung zwischen der wischblattseitigen Kupplungshälfte 128 und dem Tragelement 122, wenn diese Krallen entsprechend zusammengeklemmt werden. Weiter zeigen die Figuren 5, 6 und 8, dass die Basisstreifen 130 über an diese angeformten Winkelstützen 134 mit einem Gelenkzapfen 135 verbunden sind, welcher an einem die Winkelstützen 134 der Basisstreifen 130 verbindenden bügelartigen Steg 136 ausgebildet ist. Dabei sind die Winkelstützen 134 jeweils zwischen den klammerartigen Fortsätzen 132 eines Basisstreifens 130 angeordnet. Der Abstand 137 zwischen dem Gelenkzapfen 135 und dem Tragelement 122 ist mindestens doppelt so groß wie der Durchmesser 138 (Figur 6) des Gelenkzapfens 135. Zwischen den quer zur Wischblatt-Längserstreckung einander gegenüberliegenden Winkelstützen 134 der Basisstreifen 130 einerseits und dem Tragelement 122 und dem Gelenkzapfen 135 andererseits verbleibt somit ein Durchgang 139, der so groß ist, dass er dem die Längsnuten 124 der Wischleiste 120 nach oben begrenzenden Deckbereich 140 einen berührungsfreien Durchgang gestattet. An jedem der Basisstreifen 130 befindet sich ein sich vom Tragelement weg erstreckender und in Längsrichtung des Tragelements 122 ausgerichteter Schenkel 142, der zwei Schenkelhälften aufweist, von denen sich jede Schenkelhälfte auf einer der beiden Seiten der Winkelstützen 134 befindet. Die beiden Teilschenkel eines jeden Basisstreifen 130 bilden eine zusammengehörige Wand auf deren Bedeutung später noch eingegangen wird.

Der Aufbau der wischerarmseitigen Kupplungshälfte 126 ist aus den Figuren 6 bis 8 ersichtlich. Auch diese Kupplungshälfte hat einen im wesentlichen U-förmigen Querschnitt (Figur 8). Er hat somit eine U-Basis 143, an die sich zwei mit Abstand voneinander liegende U-Schenkel 144 anschließen. Die einander zugewandten Innenwände der Wangen 145 der U-Schenkel 144 liegen mit einem Abstand 146 voneinander, der dem Abstand der beiden voneinander abgewandten Außenwände der Schenkel 142 entspricht. Mit Abstand von diesen Innenwänden 145 sind an die U-Basis 143 zu den U-Schenkeln 144 parallele Zwischenwände 146 angeformt (Figur 6 und 7), wobei der Abstand zwischen den Zwischenwänden 146 und den U-Schenkeln 144 auf die Dicke 147 (Figur 5) der Schenkel 142 abgestimmt ist. Weiter ist an die U-Basis 143 der Kupplungshälfte 126 eine klemmlagerung 150 angeformt, welche zwei elastisch auslenkbare Lappen 151 beinhaltet. In den einander zugewandten Innenseite der Lappen 151 ist eine Lageraufnahme 152 für den Gelenkzapfen 135 ausgebildet. Die einstückig an der aus einem elastischen Kunststoff gefertigten Kupplungshälfte 126 angeformten Lappen 151 sind ebenso wie die Streifen 66 bei der schon beschriebenen Ausführungsform derart freigestellt, dass sie soweit aufgespreizt werden können, dass der Gelenkzapfen 135 in seine Lageraufnahme 152 gelangen kann. Dabei sind die Lappen öffnungsseitig so ausgebildet, dass alleine eine durch den Pfeil 153 in Figur 6 bezeichnete Montagebewegung die Spreizung der Lappen 151 gegen eine Rückstellkraft bewirkt.

Bei der in den Figuren 7 und 8 dargestellten Betriebsposition erstrecken sich die hochgestellten Schenkel 142 der Basisstreifen 130 in die schlitzartigen Zwischenräume zwischen den Zwischenwänden 146 und den U-Schenkeln 144 der Kupplungshälfte 126, wobei sie an den durch die U-Schenkel 144 des Wischerarms und/oder durch an den ihnen zugewandten Zwischenwänden 146 gebildeten Wangen passend anliegen. Dadurch wird für eine ordnungsgemäße Führung des Wischblatts 14 gegenüber an dem Wischerarm 12 gesorgt. Versteifungsrippen 154 zwischen den Zwischenwänden tragen zur Stabilisierung der Kupplungshälfte 126 bei. Um das Wischblatt von dem Wischerarm abzunehmen beziehungsweise die beiden Kupplungshälften 126 und 128 voneinander zu trennen, genügt es das Wischblatt entgegen dem Montagepfeil 153 zu belasten, so dass der Gelenkzapfen 135 unter vorübergehender Spreizung der Lappen 151 aus seiner Lageraufnahme 152 gelangt.

Beiden beschriebenen Ausführungsformen der erfindungsgemäßen Verbindungsvorrichtung ist gemeinsam, dass die wischblattfeste zweite Kupplungshälfte 28 beziehungsweise 128 als Blech-Biegeteil ausgebildet ist, mit dem der Gelenkzapfen 46 beziehungsweise 135 einstückig verbunden an dieses angeformt ist.

Eine Nutzung der Erfindung ist also schon dann gegeben, wenn entweder das Wischblatt und/oder der Wischerarm entsprechend der hier hinsichtlich des Gelenks gegebenen und beanspruchten Offenbarung ausgebildet ist.

## Patentansprüche

1. Vorrichtung zum lösbaren, gelenkigen Verbinden eines Wischblatts (14) mit einem einendig angetriebenen Wischerarm (12), der an seinem anderen, insbesondere freien Ende (13) mit einer ersten, wischerarmfeste kupplungshälfte (26) der Vorrichtung versehen ist und die Verbindungsvorrichtung (24), eine zweite, wischblattfeste Kupplungshälfte (28) aufweist, die an der oberen Bandseite (23) eines bandartig langgestreckten, federelastischen Tragelements (22) angeordnet ist, an dessen anderen, unteren Bandfläche (21) sich eine an der Scheibe anlegbare, gummielastische Wischleiste (20) befindet und die wischblattfeste Kupplungshälfte einen quer zur Wischblatt-Längserstreckung und quer zur Anlegerichtung (Pfeil 18) ausgerichteten Gelenkzapfen (46 beziehungsweise 135) zum Anschließen an den Wischerarm hat, dessen Längsachse die Gelenkachse (17) der Vorrichtung bildet und dem eine an der wischerarmfesten Kupplungshälfte (26) vorhandene Zapfen-Lageraufnahme (63 beziehungsweise 150) zugeordnet ist, **dadurch gekennzeichnet, dass** die wischblattfeste zweite Kupplungshälfte (28) als Blech-Biegeteil ausgebildet ist, mit dem der Gelenkzapfen (46 beziehungsweise 135) einstückig verbunden an dieses angeformt ist.

2. Vorrichtung nach Anspruch 1, **dadurch gekennzeichnet, dass** zumindest ein Teilabschnitt des Blech-Biegeteils hülsenartig gerollt als Gelenkzapfen (46 beziehungsweise 135) umgeformt ist.

3. Vorrichtung nach einem der Ansprüche 1 oder 2, **dadurch gekennzeichnet, dass** zum Blech-Biegeteil mit Abstand voneinander und parallel zueinander ausgerichtete, mit dem Tragelement (22 beziehungsweise 122) verbundene Basisstreifen (40 beziehungsweise 130) gehören, welche durch einen den Gelenkzapfen aufweisenden bügelartigen Steg (44) miteinander verbunden sind.

4. Vorrichtung nach Anspruch 3, **dadurch gekennzeichnet, dass** der hülsenartig gerollte Gelenkzapfen (46) zwei miteinander fluchtende Teilzapfen aufweist, die seitlich über den bügelartigen Steg (44) hinausragen.

5. Vorrichtung nach einem der Ansprüche 1 bis 3, **dadurch gekennzeichnet, dass** sich die Längsachse (17) des Gelenkzapfens (46 beziehungsweise 135) mit Abstand von der oberen Bandfläche (23 beziehungsweise 132) des Tragelements (22 beziehungsweise 122) befindet.

6. Vorrichtung nach einem der Ansprüche 1 bis 3, **dadurch gekennzeichnet, dass** an jedem Basisstreifen (40) ein sich vom Tragelement weg erstreckender und in Längsrichtung des Tragelements (22) ausgerichteter Schenkel (50) angeordnet ist, dass die Schenkel quer zur Längserstreckung des Wischblatts gesehen mit Abstand voneinander liegen und dass diese Schenkel passend zwischen am Wischerarm (12) vorgesehene, zum Wischblatt (14) gerichtete Wangen (57) eintauchen.

7. Vorrichtung nach einem der Ansprüche 1 bis 6, **dadurch gekennzeichnet, dass** die wischerarmfeste Kupplungshälfte (26) vorzugsweise am freien Ende des Wischerarms (12) angeordnet ist, dass diese Kupplungshälfte (26) einen U-förmigen Querschnitt hat und dass die Zapfen-Lageraufnahme (62) an den U-Schenkeln (56) dieser Kupplungshälfte ausgebildet sind.

8. Vorrichtung nach Anspruch 3, **dadurch gekennzeichnet, dass** sich an den voneinander abgewandten Längskanten der Basisstreifen krallenartige Fortsätze (132) befinden, welche die voneinander abgewandten Längskanten (133) des Tragelements (12) klammerartig umgreifen.

9. Vorrichtung nach einem der Ansprüche 5 oder 8, **dadurch gekennzeichnet, dass** der Abstand vom Tragelement (122) zur Längsachse des Gelenkzapfens (135) zumindest doppelt so groß ist wie der Durchmesser (138) des Gelenkzapfens, dass die Basisstreifen (130) über an diese angeformte Winkelstützen (134) des bügelartigen Stegs (136) mit den Gelenkzapfen verbunden sind und dass zwischen den quer zur Wischblatt-Längserstreckung einander gegenüberliegenden Winkelstützen (134) der Basisstreifen (130) ein Durchgang (140) verbleibt, welche durch den Gelenkzapfen (135) nach oben begrenzt ist.

10. Vorrichtung nach Anspruch 9, **dadurch gekennzeichnet, dass** die Winkelstützen (134) zwischen zwei klammerartigen Fortsätzen (132) der Basisstreifen (130) angeordnet sind.

11. Vorrichtung nach einem der Ansprüche 8 bis 10, **dadurch gekennzeichnet, dass** an jedem Basisstreifen (130) ein sich vom Tragelement (122) weg erstreckender und in Längsrichtung des Tragelements (1221 ausgerichteter Schenkel (142) befindet, dass die Schenkel quer zur Längserstreckung des Wischblatts gesehen mit Abstand voneinander liegen und dass die Schenkel (142) zwischen am Wischerarm vorgesehene zum Wischblatt gerichtete Wangen (145) passend eintauchen.

12. Vorrichtung nach einem der Ansprüche 8 bis 11, **dadurch gekennzeichnet, dass** die wischerarmfeste Kupplungshälfte (126) vorzugsweise am freien Ende des wischerarms angeordnet ist, dass diese Kupplungshälfte einen U-förmigen Querschnitt hat und dass die Zapfen-Lageraufnahme (152) an einem an der U-Basis (143) vorhandenen sich zwischen den beiden U-Schenkeln erstreckenden Vorsprung (151) ausgebildet ist.

13. Wischerarm mit einer Kupplungshälfte entsprechend nach einem der Ansprüche 1 bis 12 ausgebildet.

14. Wischblatt zum Reinigen von Scheiben insbesondere von Kraftfahrzeugen, das ein bandartig langgestrecktes Tragelement (22, 122) für eine an dessen unteren Bandfläche(21, 131) angeordnete gummielastische Wischleiste (20) hat und an der oberen Bandfläche des Tragelements eine wischblattseitige kupplungshälfte (28, 128) zum gelenkigen Verbinden des Wischblatts mit einem mit der anderen Kupplungshälfte (26, 126) versehenen Wischerarm angeordnet ist, wobei die wischblattseitige kupplungshälfte (28, 128) zwei quer zur Längserstreckung des Wischblatts mit Abstand voneinander angeordnete Stützen (134) für zumindest einen an diesen gehaltenen zapfenartigen Gelenkbolzen hat, dessen Gelenkachse quer zur Wischblatt-Längserstreckung ausgerichtet ist, **dadurch gekennzeichnet, dass** die wischblattseitige Kupplungshälfte (28) besiehungsweise 128) als Blech-Biegeteil ausgebildet und der Gelenkzapfen (46 beziehungsweise 135) einstückig mit diesem verbunden an diese angeformt ist.

15. Wischblatt nach Anspruch 14, **dadurch gekennzeichnet, dass** der Gelenkzapfen (135) zwischen den beiden Stützen (134) der Kupplungshälfte angeordnet ist.

16. Wischblatt nach Anspruch 14, **dadurch gekennzeichnet, dass** der Gelenkzapfen zwei miteinander fluchtende Teilzapfen (46) hat, die an den voneinander abgewandten Außenseiten der Stützen angeordnet sind und sich von diesen wegerstrecken.

## Claims

1. Device for detachably and hingedly connecting a wiper blade (14) to a wiper arm (12), which is driven at one end and, at its other, in particular free, end (13), is provided with a first coupling half (26) of the device, which half is fixed to the wiper arm, and the connecting device (24) has a second coupling half (28), which is fixed to the wiper blade and is arranged on the upper band side (23) of a support element (22), which is elongate in the manner of a band, has spring elasticity and on the other, lower band surface (21) of which there is a rubber-elastic wiper strip (20) that can be placed against the pane, and the coupling half that is fixed to the wiper blade has a pivot (46 or 135), aligned transversely to the longitudinal extent of the wiper blade and transversely to the direction of application (arrow 18), for connection to the wiper arm, the longitudinal axis of which forms the hinge pivot (17) of the device and to which a pivot-bearing receptacle (63 or 150), present on the coupling half (26) that is fixed to the wiper arm, is assigned, **characterized in that** the second coupling half (28), which is fixed to the wiper blade, is designed as a bent sheet-metal component, to which the pivot (46 or 135) is connected in one piece, being formed on the latter.

2. Device according to Claim 1, **characterized in that** at least a partial section of the bent sheet-metal component is formed into a pivot (46 or 135) in the manner of a sleeve.

3. Device according to either of Claims 1 and 2, **characterized in that** the bent sheet-metal component includes base strips (40 or 130), which are aligned at a distance from one another and parallel to one another, are connected to the support element (22 or 122) and are connected to one another by a hoop-like web (44), which has the pivot.

4. Device according to Claim 3, **characterized in that** the pivot (46) rolled in the manner of a sleeve has two mutually aligned component pivots, which project laterally beyond the hoop-like web (44).

5. Device according to any of Claims 1 to 3, **characterized in that** the longitudinal axis (17) of the pivot (46 or 135) is at a distance from the upper band surface (23 or 132) of the support element (22 or 122).

6. Device according to any of Claims 1 to 3, **characterized in that** a limb (50) extending away from the support element and aligned in the longitudinal direction of the support element (22) is arranged on each base strip (40), **in that** the limbs are at a distance from one another when viewed transversely to the longitudinal extent of the wiper blade, and **in that** the limbs fit between cheeks (57) provided on the wiper arm (12) and pointing toward the wiper blade (14).

7. Device according to any of Claims 1 to 6, **characterized in that** the coupling half (26) fixed to the wiper arm is preferably arranged on the free end of the wiper arm (12), **in that** this coupling half (26) has a U-shaped cross section, and **in that** the pivot-bearing receptacle (62) is formed on the U limbs (56) of this coupling half.

8. Device according to Claim 3, **characterized in that** claw-like extensions (132), which engage in a clip-like manner around the mutually remote longitudinal edges (133) of the support element (12), are situated on the mutually remote longitudinal edges of the base strips.

9. Device according to either of Claims 5 and 8, **characterized in that** the distance between the support element (122) and the longitudinal axis of the pivot (135) is at least twice as large as the diameter (138) of the pivot, **in that** the base strips (130) are connected to the pivot by means of angle brackets (134), integrally formed on them, of the hoop-like web (136), and **in that** a passage (140), which is bounded at the top by the pivot (135), remains between the angle brackets (134) of the base strips (130), said angle brackets being situated opposite one another, transversely to the longitudinal extent of the wiper blade.

10. Device according to Claim 9, **characterized in that** the angle brackets (134) are arranged between two clip-like extensions (132) of the base strips (130).

11. Device according to any of Claims 8 to 10, **characterized in that** there is on each base strip (130) a limb (142) that extends away from the support element (122) and is aligned in the longitudinal direction of the support element (122), **in that** the limbs are at a distance from one another when viewed transversely to the longitudinal extent of the wiper blade, and **in that** the limbs (142) fit between cheeks (145) provided on the wiper arm and pointing toward the wiper blade.

12. Device according to any of Claims 8 to 11, **characterized in that** the coupling half (126) fixed to the wiper arm is preferably arranged on the free end of the wiper arm, **in that** this coupling half has a U-shaped cross section, and **in that** the pivot-bearing receptacle (152) is formed on a projection (151) present on the U base (143) and extending between the two U limbs.

13. Wiper arm with a coupling half formed in an appropriate manner in accordance with any of Claims 1 to 12.

14. Wiper blade for cleaning panes, in particular panes of motor vehicles, which has a support element (22, 122), which is elongate in the manner of a band, for a rubber-elastic wiper strip (20) arranged on the lower band surface (21, 131) of said support element, and a coupling half (28, 128) on the wiper-blade side for the hinged connection of the wiper blade to a wiper arm provided with the other coupling half (26, 126) is arranged on the upper band surface of the support element, the coupling half (28, 128) on the wiper-blade side having two supports (134), which are arranged at a distance from one another, transversely to the longitudinal extent of the wiper blade, for at least one pivot-type hinge pin held on said supports, the hinge axis of which is aligned transversely to the longitudinal extent of the wiper blade, **characterized in that** the coupling half (28 or 128) on the wiper-blade side is designed as a bent sheet-metal component and the pivot (46 or 135) is connected in one piece to the latter, being formed on it.

15. Wiper blade according to Claim 14, **characterized in that** the pivot (135) is arranged between the two supports (134) of the coupling half.

16. Wiper blade according to Claim 14, **characterized in that** the pivot has two mutually aligned component pivots (46), which are arranged on the mutually remote outer sides of the supports and extend away from these.

## Revendications

1. Dispositif de connexion articulée amovible d'un balai d'essuie-glace (14) comportant un bras d'essuie-glace (12) entraîné à une extrémité, et dont l'autre extrémité (13), en particulier libre, est munie d'une première moitié de couplage (26), solidaire du bras d'essuie-glace, du dispositif, le dispositif de connexion (24) présentant une deuxième moitié de couplage (28) solidaire du balai d'essuie-glace, disposée sur la face supérieure en bande (23) d'un élément de support (22) à élasticité de ressort, étendu longitudinalement à la façon d'une bande, dont l'autre face inférieure en bande (21) comporte une baguette (20) d'essuie-glace à élasticité de caoutchouc, pouvant s'appuyer contre la vitre, la moitié de couplage solidaire du balai d'essuie-glace ayant un pivot (46 et 135), orienté perpendiculairement à l'étendue longitudinale du balai d'essuie-glace et perpendiculairement à la direction d'appui (flèche 18), pour le raccordement au bras d'essuie-glace, pivot dont l'axe longitudinal forme l'axe d'articulation (17) du dispositif et auquel un logement de pivot (63 et 150) présent sur la moitié de couplage (26) solidaire du bras d'essuie-glace est associé,
**caractérisé en ce que**
la deuxième moitié de couplage (28) solidaire du balai d'essuie-glace est conçue en tant que pièce de flexion en tôle, sur laquelle le pivot (46 et 135) est formé d'une seule pièce.

2. Dispositif selon la revendication 1,
**caractérisé en ce qu'**
au moins un segment partiel de la pièce de flexion en tôle est enroulé à la façon d'un manchon, comme pivot (46 et 135).

3. Dispositif selon l'une quelconque des revendications 1 ou 2,
**caractérisé en ce que**
la pièce de flexion en tôle contient des bandes de base (40 et 130), orientées à distance l'une de l'autre et parallèlement l'une par rapport à l'autre, et reliées l'une à l'autre par une tige (44) du type en étrier présentant le pivot.

4. Dispositif selon la revendication 3,
**caractérisé en ce que**
le pivot (46) enroulé à la façon d'un manchon présente deux pivots partiels situés au même niveau l'un que l'autre, et qui font saillie latéralement au-dessus de la tige (44) du type en étrier.

5. Dispositif selon l'une quelconque des revendications 1 à 3,
**caractérisé en ce que**
l'axe longitudinal (17) du pivot (46 ou 135) est écarté de la face supérieure en bande (23 et 132) de l'élément de support (22 et 122).

6. Dispositif selon l'une quelconque des revendications 1 à 3,
**caractérisé en ce qu'**
une branche (50) s'étendant à l'écart de l'élément de support et orientée dans la direction longitudinale de l'élément de support (22) est disposée sur chaque bande de base (40), les branches, vues perpendiculairement à l'étendue longitudinale du balai d'essuie-glace, sont situées à distance l'une de l'autre, et ces branches plongent, de manière ajustée, entre des joues (57) prévues sur le bras d'essuie-glace (12), orientées vers le balai d'essuie-glace (14).

7. Dispositif selon l'une quelconque des revendications 1 à 6,
**caractérisé en ce que**
la moitié de couplage (26) solidaire du bras d'essuie-glace est disposée de préférence sur l'extrémité libre du bras d'essuie-glace (12), cette moitié de couplage (26) a une section en forme de U et le logement (62) du pivot est formé sur les branches en U (56) de cette moitié de couplage.

8. Dispositif selon la revendication 3,
**caractérisé en ce que**
des prolongements (132) en forme de griffes, qui entourent comme des pinces les bords longitudinaux (133) éloignés l'un de l'autre de l'élément de support (12), se trouvent sur les bords longitudinaux éloignés l'un de l'autre des bandes de base.

9. Dispositif selon l'une quelconque des revendications 5 ou 8,
**caractérisé en ce que**
la distance de l'élément de support (122) par rapport à l'axe longitudinal du pivot (135) est au moins deux fois plus grande que le diamètre (138) du pivot, les bandes de base (130) sont connectées avec le pivot au moyen d'appuis angulaires (134), formés sur celles-ci, de la tige (135) du type en étrier et, entre les appuis angulaires (134), situés en face l'un de l'autre perpendiculairement à l'étendue longitudinale du balai d'essuie-glace, des bandes de base (130), il reste un passage (140) qui est limité vers le haut par le pivot (135).

10. Dispositif selon la revendication 9,
**caractérisé en ce que**
les appuis angulaires (134) sont disposés entre deux prolongements (132) en forme de pinces des bandes de base (130).

11. Dispositif selon l'une quelconque des revendications 8 à 10,
**caractérisé en ce qu'**
une branche (142) s'étendant à l'écart de l'élément de support (122) et orientée dans la direction longitudinale de l'élément de support (122) est disposée sur chaque bande de base (130), les branches, vues perpendiculairement à l'étendue longitudinale du balai d'essuie-glace, sont situées à distance l'une de l'autre, et ces branches (142) plongent, de manière ajustée, entre des joues (145) prévues sur le bras d'essuie-glace, orientées vers le balai d'essuie-glace.

12. Dispositif selon l'une quelconque des revendications 8 à 11,
**caractérisé en ce que**
la moitié de couplage (126) solidaire du bras d'essuie-glace est disposée de préférence sur l'extrémité libre du bras d'essuie-glace, cette moitié de couplage a une section en forme de U et le logement (152) du pivot est formé sur une partie saillante (151) située sur la base en U (143) et s'étendant entre les deux branches en U.

13. Bras d'essuie-glace avec une moitié de couplage, conçu en conséquence selon l'une des revendications 1 à 12.

14. Balai d'essuie-glace pour le nettoyage de vitres, en particulier de véhicules automobiles, qui possède un élément de support (22, 122) étendu longitudinalement à la façon d'une bande pour une baguette (20) d'essuie-glace à élasticité de caoutchouc disposée sur sa face inférieure en bande (21, 131) et dans lequel une moitié de couplage (28, 128) côté balai d'essuie-glace, pour la connexion articulée du balai d'essuie-glace avec un bras d'essuie-glace muni de l'autre moitié de couplage (26, 126), est disposée sur la face supérieure en bande de l'élément de support, la moitié de couplage (28, 128) côté balai d'essuie-glace possédant deux appuis (134), écartés l'un de l'autre perpendiculairement à l'étendue longitudinale du balai d'essuie-glace, et destinée à au moins un tourillon d'articulation du type pivot, maintenu sur ces appuis, dont l'axe d'articulation est orienté perpendiculairement à l'étendue longitudinale du balai d'essuie-glace,
**caractérisé en ce que**
la moitié de couplage (28, 128) côté balai d'essuie-glace est conçue en tant que pièce de flexion en tôle et le pivot (46 et 135) est formé contre celle-ci en étant connectée en une pièce avec celle-ci.

15. Balai d'essuie-glace selon la revendication 14,
**caractérisé en ce que**
le pivot (135) est disposé entre les deux appuis (134) de la moitié de couplage.

16. Balai d'essuie-glace selon la revendication 14,
**caractérisé en ce que**
le pivot comporte deux pivots partiels (46) situés au même niveau l'un que l'autre, et disposés sur les faces extérieures des appuis éloignées l'une de l'autre en s'écartant de celles-ci.
